# EUROPEAN PATENT SPECIFICATION

(11) **EP 1 168 122 B1**
(45) Date of publication and mention of the grant of the patent: **09.05.2007**
(21) Application number: 01305581.9
(22) Date of filing: 27.06.2001
(51) Int. Cl.: G05B 19/042, G01N 30/88, G01N 30/86, G06F 19/00

(54) **Analyzer system**
System zur Analyse
Système d'analyse

(30) Priority: 30.06.2000 JP 2000199291
(43) Date of publication of application: 02.01.2002
(73) Proprietor: SII NanoTechnology Inc., Chiba-shi, Chiba 261-8507 (JP)
(72) Inventor: Nakatani, Rintaro, c/o Seiko Instruments Inc., Chiba-shi, Chiba (JP)
(74) Representative: Sturt, Clifford Mark

(56) References cited:
- EP-A- 0 899 568
- US-A- 5 970 425
- US-A- 6 036 856

## Description

The present invention relates to an analyzer system having high sensitivity with respect to specific analysis procedures.

In recent years, operations of analyzers have not been carried out independently in the analyzers themselves, and it has become more commonplace to carry out analysis using an analyzer system made up of computer hardware, such as a personal computer, and software for performing control of the analyzer and results of data analysis. This analyzer system is either built in to an analyzer, or is used being connected to the analyzer by a communication line or magnetic media. Except for some operations, such as inserting a sample in the analyzer, most of the operations of the analyzer are carried out through the analyzer system.

Generally speaking, analyzers are quite expensive, and are shared by a number of stations and a number of procedures depending on the frequency of use. For example, a thermal analyzer or the like is required in order to investigate heating behavior. However, when an analyzer is not used that often, only one device may be provided for all analysis departments of the company. This type of analyzer is shared by a large number of stations and procedures and therefore has to be adapted to a wide area of use. This inevitably leads to the analyzer system having a lot of functions.

However, provision of a large number of functions also involves simultaneous selection and display of a lot of operations, and so it is difficult to understand how to perform any particular procedure. For this reason, in order to adapt an analyzer system having a lot of functions to a specific analysis procedure, settings such as described in the following are carried out in the analyzer software.
(1) editing of user interface such as an operation menu.
(2) Description of parameters required for function call sequencing and function execution of analyzer software, and automation of operations.

In order to call these settings, normal analyzer software is launched and the settings are either explicitly or implicitly called.

However, recent rationalization of the analysis procedures has brought about the following increase in usage conditions.
(1) Increase in the number of analysis procedures per person in charge of analysis. Analysis procedures that are not all that detailed must also be performed.
(2) Specialization of analysis. A person who is experienced with analysis is dedicated to the development of analytical methods, while the practicalities of analysis are carried out by a person who is not that well qualified in analysis.
(3) Shift of analytical methods from analytical departments to on-site departments. The analytical departments are dedicated to development of analytical methods and analytical instruction, etc., while the practicalities of analysis are performed by the on-site departments.
   Generally, in order for a user who is experienced in analysis to derive the maximum functionality it is preferable to give detailed instructions, but in order to reduce the usage load on a user who is disinterested in analysis it is preferable to give as little instruction as possible. In order to handle a variety of users, detailed setting of a user interface is becoming more necessary for each analysis procedure.
   Because of these types of issues, in the related art there are the following problems.
(4) In performing an specific analysis procedure, a generic program must be called once. Since this is not direct, it takes time and is complicated. Also, when a number of processing procedures are carried out, the level of complexity is doubled. The time taken and the level of complexity due to the fact that it is not direct can be likened to using a personal computer and a calculator program in the personal computer to perform a simple calculation that could be performed more easily with an actual calculator. The level of complexity increases the load on a user.
(5) There are results of editing a user interface such as an operation menu for each item of analysis software, and they are implicitly called. For this reason, when carrying out a number of analysis procedures, it is not possible, for instance, to modify the menus for each analysis procedure.
The present invention is intended to solve these problems, and provides an analysis system that enables setting of analysis software for a number of specific analysis procedures, and directly calls specific analysis procedures.

It is the object of the present invention to provide an implementation to enable resolution of the above problems.

US patent 6,036,856, issued on 14th March 2000, relates to a liquid chromatograph apparatus and method of outputting an analysis result. The chromatograph apparatus is configured so that it can edit an output format, whereby an analyst is easily able to use an output of the apparatus for analysis. The apparatus comprises a chromatographic unit composed of a detector for collecting chromatographic data, an automatic sampler for taking a sample, a pump for performing eluent switching and liquid transmission and a column oven for keeping a column at a constant temperature. Also included is a data processing means for performing data processing, such as waveform processing or quantitative calculation. The data processing means has a setting means, whereby a user can arbitrarily set an output format when an analysis result is output after measurement. During use of the apparatus the user generates an analysis condition by inputting an operating condition of each of the components of the chromatograph unit. This means inputting, for example, an injection amount and number of injections of the sampler, a mixing ratio of the eluent, the flow rate and upper and lower pressure limits of the pump, and the temperature set value of the column.

In accordance with the present invention there is provided an analyzer system having the features recited in claim 1. Various realizations of the invention are set forth in the dependent claims.

Embodiments of the present invention will now be described by way of further example only and with reference to the accompanying drawings, in which:-
Fig. 1 is a block diagram showing an embodiment of the present invention.
Fig. 2 is an explanatory drawing of a general purpose temperature parameter input dialog box of the embodiment of the present invention.
Fig. 3 is an explanatory drawing of a melting point measurement temperature parameter input dialog box of the embodiment of the present invention.
Fig. 4 is an explanatory drawing of melting point measurement job representation of the embodiment of the present invention.
Fig. 5 is a flowchart of the analyzer software of the embodiment of the present invention.
Fig. 6 is a block diagram showing another embodiment of the present invention where information within the job information is separately managed.
Fig. 7 is a block diagram showing another embodiment of the present invention where job information is managed by the analyzer software.

A first embodiment of this invention will be described in the following based on the drawings.

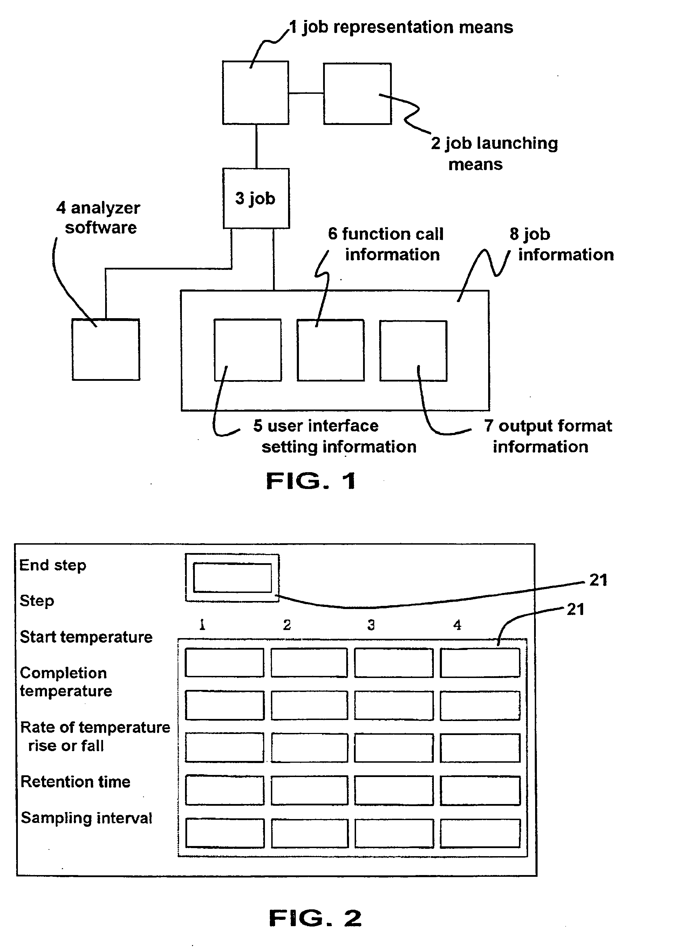

Fig. 1 is block diagram of an embodiment of the present invention. An analyzer system is realized as hardware such as a personal computer, and software running on this hardware, and Fig. 1 shows functions relating to the gist of the present invention inside the analyzer system extracted as blocks. The analyzer system itself can be either built-in to an analyzer, or separated from the analyzer. In the event that it is separated from the analyzer, the analyzer system is connected to the analyzer by a communication line or storage media etc. Reference numeral 4 in Fig. 1 is analyzer software 4 bearing the main burden of the analysis. This analyzer software 4 has all or some of the functions described in the following.
(1) Carrying out control and measurement for the analyzer.
(2) Analyzing data acquired through measurement.
(3) Outputting results of measurement or analysis, namely analysis results.

A user performs an analysis procedure by appropriately supplying instructions to the analyzer software 4. Instructions from the user are different depending on the analysis procedure and knowledge level of the user, as previously described. Information for setting of the analyzer software 4 so as to be able to handle different instructions is the job information 8. With this embodiment, the job information 8 is made up of user interface setting information 5, function call information 6, and output format information 7.

The user interface setting information is for carrying out user interface setting for interaction between the analysis software 4 and the user.

User interface input uses an input device such as a keyboard or a mouse provided with the computer hardware, a pointing device, or a microphone. Output of the user interface uses an output device such as a display unit or a speaker. Interaction with the analyzer software 4 is generally as described in the following.
Step 1: Analyzer software 4 outputs what the current condition is and what operations are possible.
Step 2: The user performs input in response to the output.
Step 3: The analyzer performs processing according to instructions.
Step 4: The analyzer software 4 outputs results of processing.
Step 1 to step 4 are normally repeated until the user acquires a specified output.

The user interface setting information 5 is for setting what type of output and how detailed an output the analysis software 4 outputs in step1, and setting how the analyzer software will analyze the input in step 2, and is information as described in the following.(1) Whether output for each item of menu and icon is correct, and their position.
(2) Layout of dialog boxes displayed on the output device to be used in condition ascertainment of the analyzer software 4 and parameter input. Included in this is information indicating: whether or not to display each item in a dialog box; display position and size of the dialog box, and how to display what is input when there is no display with respect to items used in parameter input.
(3) Information about functions referred to as keyboard accelerators for performing menu calls according to input of a specific key.

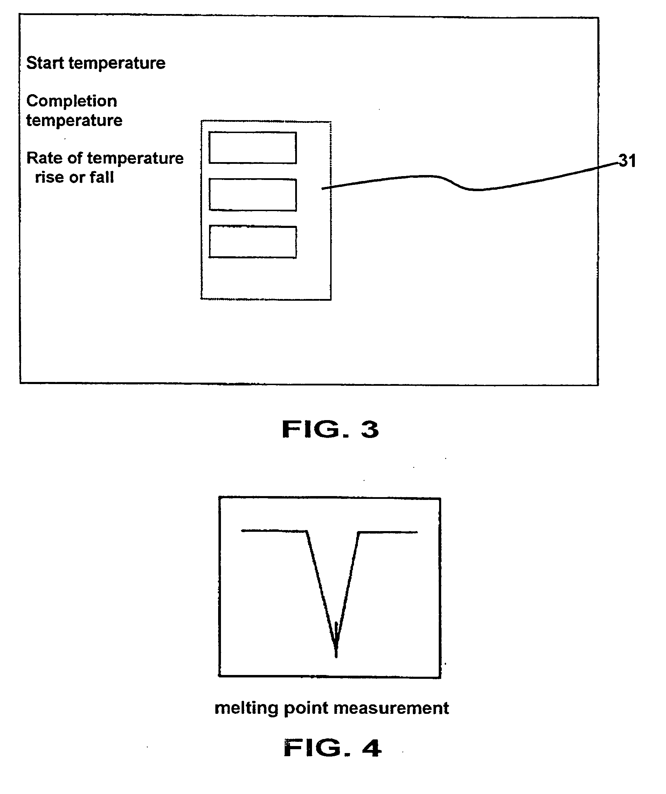

The user interface setting information 5 enables user interface setting according to analysis procedures by setting of these items of information. For example, a setting example for the information described in (2) above will be described simply using Fig. 2 and Fig. 3.

Fig. 2 is a temperature parameter input dialog box for setting at the time of measurement with a thermal analyzer.

In order to provide detailed support of all thermal analysis procedures such as placement at a fixed temperature, in addition to measurements such as measurement of rise and fall in temperature and heat history, setting of a single rising temperature or falling temperature is enabled in one or a plurality of steps, which means that there are a lot of parameter input items 21.

Fig. 3 is a temperature parameter input dialog box adapted from the dialog box of Fig. 2 to a melting point measurement procedure using a thermal analyzer. Setting for the dialog box of this embodiment is realized based on the general purpose analyzer dialog box of Fig. 2, by setting: whether or not to display each item in that dialog box; and how to handle what has been input when there is no display with respect to items used in parameter input. Since melting point measurement carries out only simple increasing heat measurements, input is limited to a single step. Among the items input in the single step, those that can be implicitly determined are not displayed, and setting is carried out to handle input of 1 for endstep, 0 for retention time and minimum for sampling interval. As a result, compared to parameter input items 21, the parameter input items 31 are reduced in number, and it becomes possible to reduce instructions.

The function call information 6 in Fig. 1 describes parameters necessary for function call sequencing and function execution of the analyzer software 4, in order to automate or semi-automate operations of the analyzer software 4. As described previously, since there are numerous functions of the analyzer software 4, it is difficult for a user who is not familiar with that analysis to know what functions of the analyzer software 4 should be used, and may find function selection confusing.

For example, melting point measurement analysis is enabled if there are the following functions.
(1) temperature parameter setting function.
(2) measurement function.
(3) record melting point in data function.
(4) report create function.

Normally, before executing each function, menus and icons are selected, and function calls must be performed. Accordingly, melting point analysis requires the operations of the analyzer software 4 as described in the following.
Step 1.temperature parameter setting function call
Step 2.input temperature parameter
Step 3.instruct measurement start
Step 4.await completion of measurement
Step 5.read out arbitrary point in data function call
Step 6.read out melting point in data
Step 7.report create function call
Step 8.select report format
Step 9.instruct creation of report

Since a specific analysis procedure performs fixed function calls every time, if the settings described below are put into the function call information 6 in advance, the melting point measurement will be semi-automated.
(1) Only call temperature parameter setting function.
(2) start measurement.
(3) await completion of measurement.
(4) only call function for reading out arbitrary points in data.
(5) only call report create function call function
(6) start creation of report
Operation of the analyzer software 4 when set as described above is as described in the following.
Step 1.input temperature parameter
Step 2.read out melting point data
Step 3.select report format
Step 4.instruct creation of report

Further, by restricting the sample to be measured and restricting the method of reading out melting points, for example, by making the sample indium and reading a minimum data value out as the melting point, and putting the following settings into the function call information 6, melting point measurement can be fully automated.
(1) temperature parameter setting function.
   start temperature 30, completion temperature 200, rate of temperature rise 10 degrees C per minute.
(2) measurement start
(3) await completion of measurement
(4) read out arbitrary point in data function, read out minimum data value.
(5) report create function call, indium melting point measurement report format
(6) start creation of report

In this way, by setting the function call information 6, the instructions to the analyzer software 4 can be reduced. If the function call information 6 is not set, the analyzer software 4 is used in a normal interactive mode for selecting menus and icons.

The output format information 7 in Fig. 1 describes what format is to be used when outputting results of analysis from the analyzer software 4, and specifies the format of an output report for output of analysis results during interaction with the analyzer software 4 or for final output. Information included in the output format information 7 differs depending on the analyzer. For example, in the case of a thermal analyzer, the output format information 7 contains the following information.
(1) graph format for illustrating results. What results are drawn on what axis.
(2) numeric format when outputting numerical values of results. Number of decimal places to output.
Whether or not output of measurement information such as a temperature program is good.

The format for display using this type of information differs depending on the analysis procedure, and in the case of outputting in a determined output format, it is possible to reduce the number of instructions to the analysis software 4 by setting the output format information 7 in advance.

The job information 8 in Fig. 1 is a collection of information for allowing the analyzer software 4 to support specific analysis procedures, such as the above described user interface setting information 5, function call information 6, and output format information 7. As a structure for the job information 8, it preferably includes information for allowing the analyzer software 4 to support specific analysis procedures, such as some of the user interface setting information 5, function call information 6, and output format information 7, or other information.

In this embodiment, the user interface setting information 5, function call information 6 and output format information 7 are respectively implemented as a single file, the job information 8 is realized as a directory in which those files exist, and by placing all of the files constituting the job information 8 under that directory in advance, management of the job information 8 is made easy.

For example, with the directory name of job information for melting point measurement being MeltJob, and names of each of the information files making up the job information being respectively Interface, Function and Layout, if each of the items of information are shown described in UNIX file names the situation will be as follows.
Melting point measurement job information: MeltJob
User interface setting information within Melting point measurement job information:
MeltJob/Interface
Function call information within Melting point measurement job information:
MeltJob/Function
Output format information within Melting point measurement job information:
MeltJob/Layout

This method can simply eliminate directories to be supported in the case of eliminating the job information 8, and when the job information is implemented in a duplicated manner, it is possible to simply create copies of the directories to be supported, giving the advantage that management of the job information is simplified.

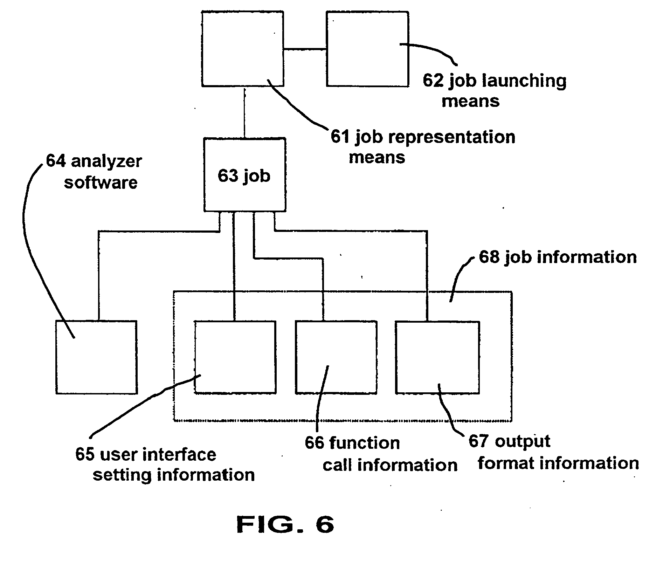

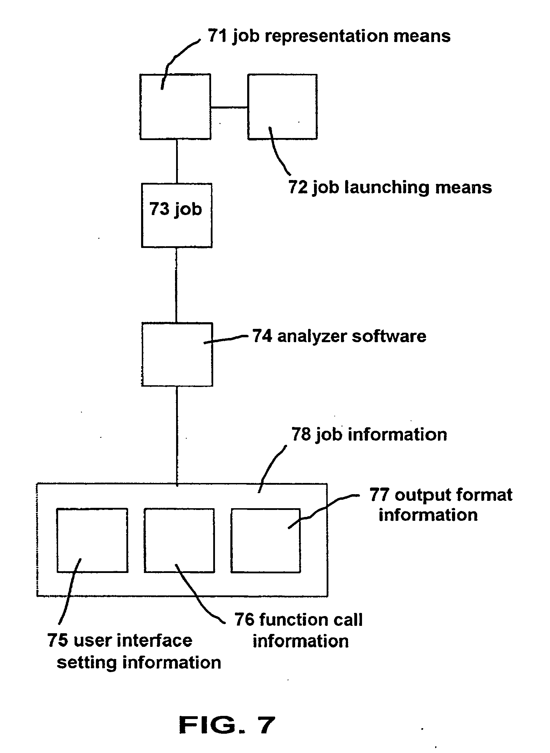

It is also possible to use the following methods to implement the job information 8.
(1) Create the job information 8 as a single file, and include all of the information items constituting the job information 8 within that file.
(2) Place each of the information items constituting the job information 8 in an arbitrary directory, and have the job 3 ascertain the location for each item of information. The job information 8 exists only in concept. This configuration is as shown in the block diagram of another embodiment shown in Fig. 6.
(3) Embed the job information 8 for each of the items of information inside information for managing the analyzer software 4.This configuration is as shown, for example, in the block diagram of another embodiment shown in Fig. 7.
(4) Provide an OS besides the files and record job information 8 in a recording mechanism for the software. For example, use a recording mechanism for software referred to as Registry for Microsoft Windows 95.
As long as the job information 8 has a structure that enables the analyzer software 4 to support specific analysis procedures using just the job information 8 or information constituting the job information 8, any implementation method may be used.

Also, it is possible for the job information 8 to be set by a user who is familiar with analysis, or to be supplied by the analyzer system manufacturer.

The job 3 in Fig. 1 is information relating the analyzer software 4 and the job information 8, and illustrates the concept of a specific analysis procedure in the analyzer system. The job 3 is made up of information showing the location of the analyzer software 4 and the job information.

In this embodiment, the file names of the analyzer software and the directory names of the job information 8 are shown as character strings connected by null characters. For example, when analyzer software 4 used in melting point measurement is ThermalAnalysis, and job information 8 is MeltJob, the job 3 is implemented as described in the following.

### ThermalAnalysis MeltJob

In this embodiment, retention of the above described job 3 is performed by job representing means 1, which will be described later. Also, as a method of retaining the job 3, there is a method, for example, of setting descriptor records in an OS operating language (for example shell in UNIX) provided by an OS.

The job representing means 1 in Fig. 1 represents the job 3 so that it can be recognized by a user, and by showing this representation the user selects a job 3, and calls analyzer software supporting a specific analysis procedure by launching the job 3.

In this embodiment, an icon illustrating software provided by the OS is used as the job representing means 1. An icon name, an icon image file and software launch character string etc. are set in this icon. The case of the aforementioned melting point measurement setting is as shown in the following. Icon name: melting point measurement
Icon image file: file for making melting point measurement into an image
Launch character string: ThermalAnalysis MeltJob

A job representation represented by the above settings is shown in Fig. 4. As shown in Fig. 4, a specific analysis procedure is represented directly as a job.

The job launch means 2 in Fig. 1 is means for launching a job. A job is launched by launching analysis software that supports an analysis procedure according to the job information shown by the job 3. How the analyzer software 4 is allowed to support is different depending on the method of representing the analyzer software 4.

With this embodiment, launch of the analyzer software uses functions of the OS, and support for analysis procedures of the analyzer software 4 is achieved by providing the job information 8 as an argument. Information passed to the OS is created under the supervision of the job 3 retained in the job representing means 1. For example, in the case of the aforementioned melting point measurement, character strings are passed to the OS as described below.

### ThermalAnalysis MeltJob

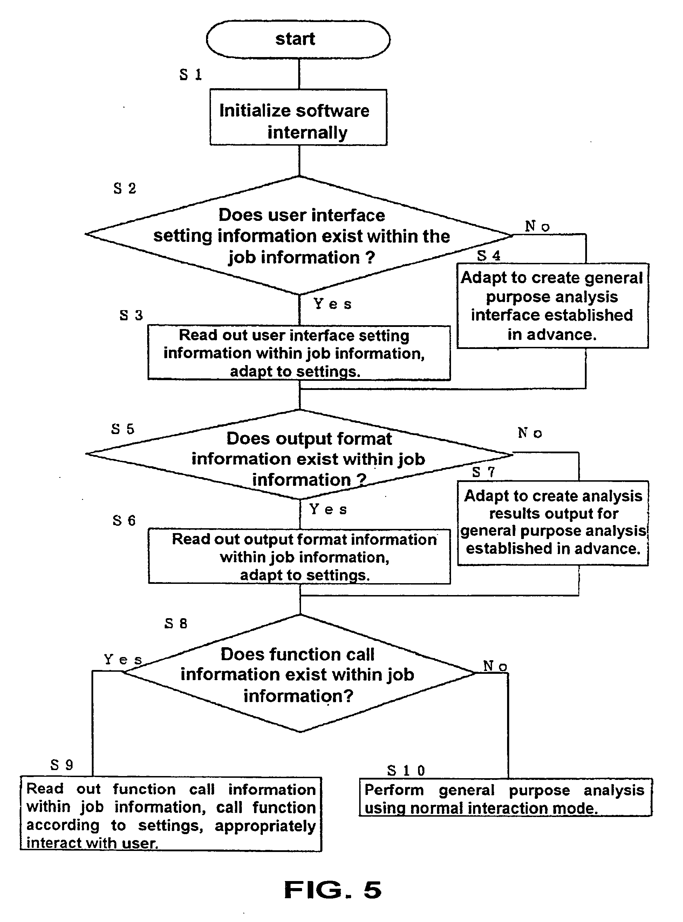

With this embodiment, the job launching means 2 refers indirectly to the job 3 through the job representing means 1, and launches the analyzer software 4 using information of the job 3, while the analyzer software 4 implements the job launch means 2 with a method of referring to the job information 8 using the supplied argument.
Besides this, any implementation method may be used as long as activation is enabled by combination of the analyzer software 4 and the job information 8. What job information 8 is taken in by the launched analyzer software will be described simply using Fig. 5. Fig. 5 is a flowchart showing partial operation of the analyzer software 4.After activation, the analyzer performs the necessary initialization (S1 in Fig. 5). After initialization, it is confirmed whether or not user interface setting information 5 exists within the job information 8 (S2 in Fig. 5).

In the case of the aforementioned melting point measurement, it is confirmed whether or not an Interface file exists in the MeltJob directory. If user interface setting information 5 exists, the user interface setting information 5 is read out, and the analyzer software 4 is caused to adapt so that a user interface is created according to the settings (S3 in Fig. 5). If user interface setting information 5 does not exist, the analyzer software 4 is caused to adapt so that a general purpose analyzer user interface determined in advance is created (S4 in Fig. 5).

Next, it is confirmed whether or not output format information 7 exists within the job information 8 (S5 in Fig. 5). In the case of the aforementioned melting point measurement, it is confirmed whether or not a Layout file exists in the MeltJob directory. If output format information 7 exists, the output format information 7 is read out, and the analyzer software 4 is caused to adapt so that an analysis results output is created according to the settings (S6 in Fig. 5).

If output format information 7 does not exist, the analyzer software 4 is caused to adapt so that a general purpose analysis results output determined in advance is created (S7 in Fig. 5).

Next, it is confirmed whether or not function call information 6 exists within the job information 8 (S8 in Fig. 5). In the case of the aforementioned melting point measurement, it is confirmed whether or not a Function file exists in the MeltJob directory. If function call information 6 exists, the function call information 6 is read out and functions are called sequentially according to the function call information 6, to appropriately interact with the user and execute the analysis procedure (S9 in Fig. 5).

If the function call information 6 does not exist, general purpose analysis is carried out using a normal interactive mode where menus and icons are output and the user selects functions (S10 in Fig. 5).

It is also possible to use the following methods to implement the job information 8.
(1) Create the job information 8 as a single file, and include all of the information items constituting the job information 8 within that file.
(2) Place each of the information items constituting the job information 8 in an arbitrary directory, and have the job 3 ascertain the location for each item of information. The job information 8 exists only in concept. This configuration is as shown in the block diagram of another embodiment shown in Fig. 6.
   The job 63 in Fig. 6, in addition to the information of the job 3, holds location position information of user interface information 65, function call information 66, and output format information 67. For example, if the above information items 65 - 67 are stored as files, the job 63 holds file names, and directory names where those files exist. The analyzer software 64 is updated so that job information 68 from the job 63 is acquired. Apart from this, the job representation means 61 and the job representation means 1, the job launching means 62 and the job launching means 2, the user interface setting information 65 and the user interface setting information 5, the function call information 66 and the function call information 6, and the output format information 67 and the output format information 7 are respectively the same.
(3) Embed the job information 8 or each of the items of information inside information for managing the analyzer software 4. This configuration is as shown, for example, in the block diagram of another embodiment shown in Fig. 7.
   The job 73 in Fig. 7 is made up of only information showing the location of the analyzer software 74. The analyzer software 74 has location position information for the job information 78 held within the information processed by itself, and is updated so as to acquire user interface information 75, function call information 76 and output format information 77 from there. Apart from this, the job representation means 71 and the job representation means 1, the job launching means 72 and the job launching means 2, the user interface setting information 75 and the user interface setting information 5, the function call information 76 and the function call information 6, the output format information 77 and the output format information 7, and the job information 78 and the job information 8 are respectively the same.
(4) Job information 8 is recorded in a recording mechanism for the software that is provided by the OS separately from the file system. For example, use a recording mechanism for software referred to as Registry for Microsoft Windows 95.

The above described embodiment is only one example of the present invention, and suitable modifications and amendments may be performed within the appended claims without departing from the scope of the present invention.

As described above, the present invention retains a combination of analyzer software and job information so as to be able to set job information for every analysis procedure so as to adapt analyzer software to a specific analysis procedure, and has a structure making it possible to assign the combination and launch, which enables direct call of a specific analysis procedure. Also, by adding user interface setting information to the structure, since it is possible to output a user interface adapted to a specific analysis procedure it becomes possible to reduce the user instructions to the analyzer software. As a result, even for a user who is disinterested in analysis. analysis is carried out with a low user load, thus optimizing the analysis procedure. Further, by appropriately setting job information, uniform analysis procedures can be expected.

## Claims

1. An analyzer system, built-in to an analyzer, and connected to the analyzer, comprising:
one or more analyzer-software programs (4) for controlling the analyzer or analyzing results output from the analyzer, the programs relating to a plurality of analysis procedures;
job information (8) having information necessary for adapting a specific analyzer-software program (4) (Thermal Analysis) to a specific analysis procedure (MeltJob);
a job (ThermalAnalysis MeltJob) linking the job information (8) (MeltJob) and the specific analyzer-software program (4) (Thermal Analysis);
job-launching means (2) for launching the job (3); and
job-representing means (1) for representing the job;
said job information being made up of:
function-call information, which describes parameters necessary for analyzer-software function call sequencing and function execution, in order to automate or semi-automate analyzer-software operations,
**characterised in that**,
said job information further includes user-interface setting information, which describes a customized state of a user interface.

2. The analyzer system of claim 1, wherein the user-interface setting information describes which menus and dialog boxes within the analyzer software are to be used.

3. The analyzer system of claim 1, wherein the job information further includes output-format information describing the format for output of analyzer-software analysis results.

4. The analyzer system of claim 1, wherein the job-launching means and job-representing means are job-launching and job-representing software, respectively.

## Patentansprüche

1. System zur Analyse, eingebaut in einen Analysator und an den Analysator angeschlossen, umfassend:
ein oder mehrere Analysator-Softwareprogramme (4) zum Steuern des Analysators oder der Ergebnisse der Analyse, die von dem Analysator ausgegeben werden, wobei sich die Programme auf mehrere Analyseverfahren beziehen;
Aufgabeninformationen (8) mit Informationen, die zum Anpassen eines spezifischen Analysator-Softwareprogramms (4) ("ThermalAnalysis" - Wärmeanalyse) an ein spezifisches Analyseverfahren ("MeltJob" - Schmelzen) notwendig sind;
eine Aufgabe ("thermalAnalysis MeltJob" - Wärmeanalyse-Schmelzen), die die Aufgabeninformationen (8) (Schmelzen) mit dem spezifischen Analysator-Softwareprogramm (4) (Wärmeanalyse) verknüpft;
ein Aufgabenstartmittel (2) zum Starten der Aufgabe (3); und
ein Aufgabendarstellungsmittel (1) zum Darstellen der Aufgabe;
wobei die Aufgabeninformationen aus Folgendem bestehen:
Funktionsaufrufinformationen, die die Parameter beschreiben, die für eine Analysator-Software-Funktionsaufrufsequenzierungs- und -funktionsausführung notwendig sind, um die Analysator-Softwareoperationen zu automatisieren oder halb zu automatisieren,
**dadurch gekennzeichnet, dass**
die Aufgabeinformationen des Weiteren Benutzerschnittstellen-Einstellinformationen enthalten, die einen auf den Kunden abgestimmten Zustand einer Benutzerschnittstelle beschreiben.

2. System zur Analyse nach Anspruch 1, wobei die Benutzerschnittstellen-Einstellinformationen beschreiben, welche Menüs und Dialogfelder in der Analysator-Software zu verwenden sind.

3. System zur Analyse nach Anspruch 1, wobei die Aufgabeninformationen des Weiteren Ausgabeformatinformationen enthalten, die das Format zur Ausgabe von Analysator-Software-Analyseergebnisse beschreiben.

4. System zur Analyse nach Anspruch 1, wobei das Aufgabenstartmittel und das Aufgabendarstellungsmittel Aufgabenstart- beziehungsweise Aufgabendarstellungssoftware ist.

## Revendications

1. Système d'analyse, intégré dans un analyseur, et connecté à l'analyseur, comprenant :
un ou plusieurs programmes logiciels d'analyse (4) pour contrôler l'analyseur ou des résultats d'analyse produits par l'analyseur, les programmes concernant une pluralité de procédures d'analyse ;
de l'information de tâche (8) ayant de l'information nécessaire pour adapter un programme logiciel d'analyse spécifique (4) (Analyse Thermique) à une procédure d'analyse spécifique (MeltJob ou tâche de fusion);
une tâche (Tâche de Fusion d'Analyse Thermique) reliant l'information de tâche (8) (MeltJob ou Tâche de Fusion) et le programme logiciel d'analyse spécifique (4) (Analyse Thermique) ;
un moyen de lancement de tâches (2) pour lancer la tâche (3) ; et
un moyen de représentation de tâches (1) pour représenter la tâche ;
ladite information de tâche étant formée par :
de l'information d'appel de fonction, laquelle décrit des paramètres nécessaires pour le séquencement d'appels de fonction du logiciel d'analyse et
l'exécution de la fonction afin d'automatiser ou de partiellement automatiser les opérations du logiciel d'analyse,
**caractérisé en ce que**
ladite information de tâche comprend par ailleurs de l'information de paramétrage de l'interface utilisateurs, laquelle décrit un état personnalisé d'une interface utilisateurs.

2. Système d'analyse selon la revendication 1, avec lequel l'information de paramétrage de l'interface utilisateurs décrit quels menus et quelles boîtes de dialogues du logiciel d'analyse doivent être utilisé (e) s.

3. Système d'analyse selon la revendication 1, avec lequel l'information de tâche comprend en outre de l'information de sortie décrivant le format de sortie des résultats d'analyse du logiciel d'analyse.

4. Système d'analyse selon la revendication 1, avec lequel le moyen de lancement de tâches et le moyen de représentation de tâches sont respectivement un logiciel de lancement de tâches et de représentation de tâches.
